# EUROPEAN PATENT APPLICATION

(11) **EP 1 548 643 A1**
(43) Date of publication of application: **29.06.2005**
(21) Application number: 03799097.5
(22) Date of filing: 08.09.2003
(51) Int. Cl.: G06T 3/00, H04N 1/21, G06F 3/153

(54) **IMAGE PROCESSING DEVICE AND IMAGE PROCESSING METHOD**

(30) Priority: 04.10.2002 JP 2002292547
(71) Applicant: Sony Corporation, Tokyo 141-0001 (JP)
(72) Inventor: AOKI, Takashi, c/o Sony Corporation, Tokyo 141-0001 (JP); KOBAYASHI, Hiroshi, c/o Sony Corporation, Tokyo 141-0001 (JP); SAITO, Masatake, c/o Sony Corporation, Tokyo 141-0001 (JP)
(74) Representative: Thévenet, Jean-Bruno
(86) International application number: PCT/JP2003/011422
(87) International publication number: WO 2004/032054

(57) **Abstract**

A process for trimming out a part of an image in a rectangular shape and transferring the trimming image is performed at higher speed than before. When a rectangular area is trimmed from image data stored in a memory 32, a DMA controlling circuit 40 sets information that represents the start address from which data are transferred and a read width to a DMA device 30. The DMA device 30 reads data for one column in the horizontal direction of the trimming image from the memory 32. The read data are supplied to a processing circuit 41 through a bus 31. Thereafter, the DMA controlling circuit 40 sets the start address of the next one column in the horizontal direction of the trimming image to the DMA device 30. The DMA device 30 reads image data for one column from the memory 32. After all columns in the vertical direction are read, the process is completed. Since image data are read for each column from the flash memory 32, image data of the rectangular area are transferred without need to read image data of an unnecessary area.

## Description

### Technical Field

The present invention relates to an image processing apparatus and an image processing method that allow any rectangular shaped image data to be effectively trimmed from image data.

### Background Art

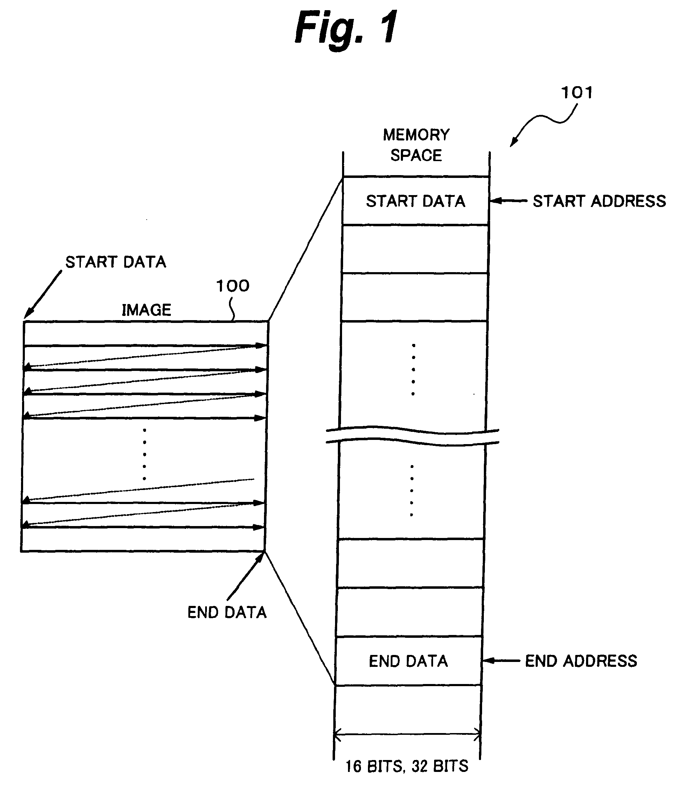

Generally, an image is successively and horizontally read from the upper left to the lower right and successively stored as image data in a space of a memory. Fig. 1 schematically shows a method for storing such image data in a memory 101. An image 100 is successively and horizontally read from the upper left corner for one column and successively stored in the memory 101. Thereafter, the image 100 is successively read from the left to the right of the subsequent column and successively stored in the memory 101. Likewise, the image 100 is successively read from the left to the right of each of the other columns and successively stored in the memory 101. The address at which the end data are stored is the end address of the space of memory 101. In such a manner, the image data of the image 100 are successively stored in the space of the memory 101.

The minimum unit of addresses in the memory 101 is 16 bits, 32 bits, or the like that depends on its specifications.

In recent years, the DMA (Direct Memory Access) transfer has been used to input and output data. As is well known, the DMA transfer uses a DMA controller besides a CPU (Central Processing Unit). When the CPU requests the DMA controller to perform its process, the DMA controller starts the DMA transfer without intervention of the CPU.

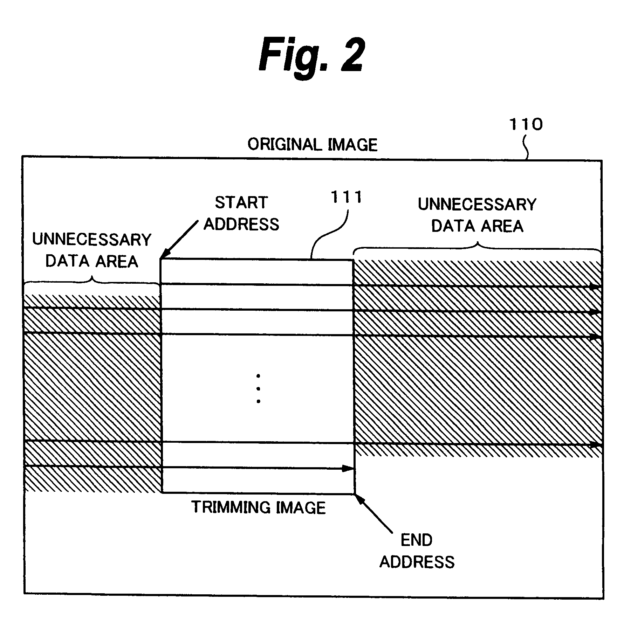

As shown in Fig. 2, it is assumed that a part of an original image 110 is trimmed in a rectangular shape and image data of a trimming image 111 are transferred. In this case, the image data are read from address A_{ST}, which is the start address of the trimming image 111, to address A_{ED}, which is the end address, of the memory by for example the DMA transferring process.

For example, in Japanese Patent No. 2888534 titled "Image Trimming Apparatus," when a rectangular area is trimmed from image data stored in a memory, the image data are read from the trimming start position to the trimming bottom position repeatedly in the X direction. For an invalid data portion, data that are output from a decoding circuit are invalidated. For only a valid data portion, data that are read from the decoding portion are validated. As a result, image data of a desired area are obtained.

In the conventional image data transferring method, data of the unnecessary area hatched in Fig. 2 other than the trimming image 111 are read from the memory. As a result, the process speed becomes slow.

In the example shown in Fig. 2, image data of the original image 110 are successively and horizontally read from the first data to the end data, from the upper left to the lower right for each column, and successively stored in the space of the memory (see Fig. 1). Thus, when address A_{ST} and address A_{ED} are designated, image data of the original image 110 are successively read from address A_{ST} to address A_{ED} of the memory. Thus, in addition to data in the rectangular area of the trimming image 111, data in the unnecessary data area hatched in Fig. 2 are read. Thus, time for which data of the unnecessary data area are read is wasteful.

### Disclosure of the Invention

Therefore, an object of the present invention is to provide an image processing apparatus and an image processing method that allow a process for trimming a part of an image in a rectangular shape and transferring the trimming image to be performed at higher speed than before.

To solve the foregoing problem, the present invention is an image processing apparatus for trimming out a part of image data stored in a memory and transferring the trimming image data, the image processing apparatus comprising: image data reading means for reading image data from a memory; and controlling means for controlling the image data reading means that reads the image data from the memory, wherein when a part of image data stored in the memory is trimmed, the controlling means is configured to control the image data reading means so as to read the image data for each column at a time from the memory.

In addition, the present invention is an image processing method for trimming a part of image data stored in a memory and transferring the trimming image data, the image processing method comprising the step of: when a part of image data stored in the memory is trimmed, reading the image data for each column at a time from the memory.

As described above, according to the present invention, when a part of image data stored in the memory is trimmed, image data are read for each column at a time from the memory. Thus, when a part of an original image is trimmed and transferred, image data of only a desired trimming image can be transferred without need to transfer data of an unnecessary area.

### Brief Description of Drawings

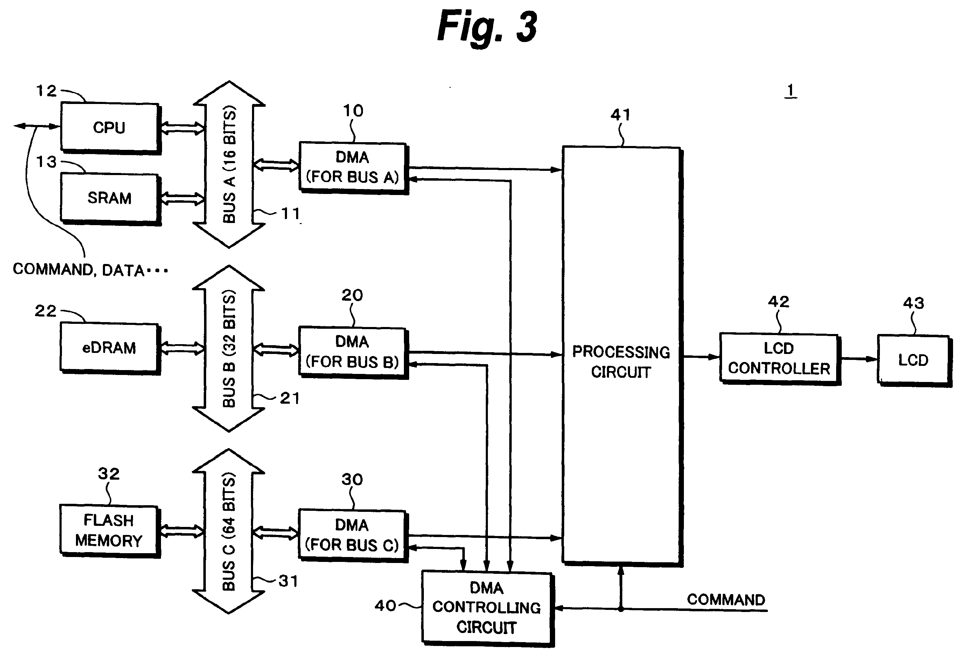

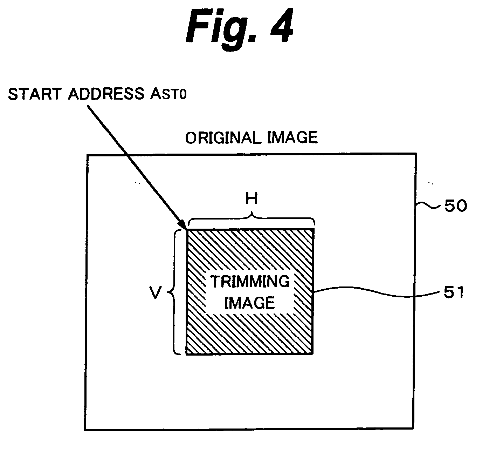

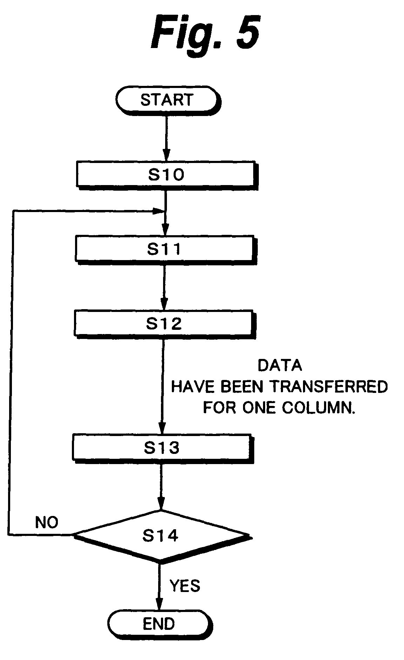

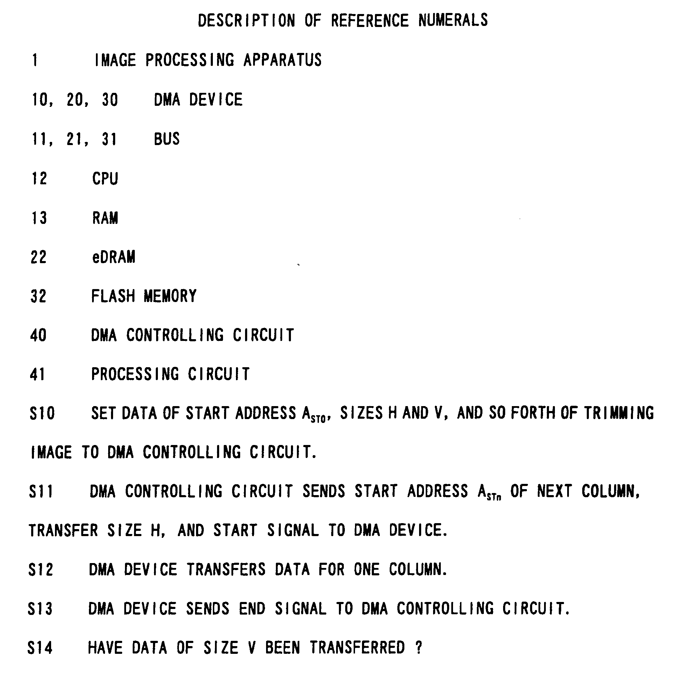

Fig. 1 is a schematic diagram showing a method for storing image data in a memory; Fig. 2 is a schematic diagram describing that a part of an original image is trimmed in a rectangular shape in accordance with a conventional technology; Fig. 3 is a block diagram showing the structure of an example of an image processing apparatus according to an embodiment of the present invention; Fig. 4 is a schematic diagram describing that a part of an original image is trimmed in a rectangular shape; and Fig. 5 is a flow chart showing an example of a process for trimming out a trimming image from an image according to the embodiment of the present invention. Best Mode for Carrying out the Invention

Next, an embodiment of the present invention will be described. According to the present invention, when a part of an image is trimmed in a rectangular shape and transferred, image data are transferred for each column at a time. In reality, start address information and read width information (width of trimming image) of the memory are designated for each column of image data that are transferred. Thus, trimming image data of which a part of an original image is trimmed can be transferred without need to transfer unnecessary data.

Fig. 3 shows the structure of an example of an image processing apparatus 1 according to the embodiment of the present invention. In the image processing apparatus 1, an image process for enlarging and reducing image size that are read from memories 13, 22, and 32 connected to a bus 11 (bus A), a bus 21 (bus B), and a bus 31 (bus C) that have different data bus widths is performed by a processing circuit 41. The processed image data are displayed on a display device for example an LCD (Liquid Crystal Display) 43.

The data bus widths of the buses 11, 21, and 31 are 16 bits, 32 bits, and 64 bits, respectively. Connected to the bus 11 are for example a CPU 12 and a RAM (Random Access Memory) 13. The CPU 12 exchanges commands and data with each portion that composes the image processing apparatus 1. The CPU 12 controls overall operations of the image processing apparatus 1. The data bus width of the RAM 13 is 16 bit. The RAM 13 is used as a work memory of the CPU 12.

Connected to the bus 21 is an eDRAM (embedded Dynamic RAM) 22 whose data bus width is 32 bits. The eDRAM 22 is a DRAM built in the image processing apparatus 1. Connected to the bus 31 is a flash memory 32 whose data bus width is 64 bits.

Connected to the buses 11, 21, and 31 are dedicated DMA devices 10, 20, and 30, respectively. The DMA devices 10, 20, and 30 control data transfers for the memories 13, 22, and 32 connected to the buses 11, 21, and 31, respectively. As will be described later, the DMA devices 10, 20, and 30 control data transfers in accordance with control signals supplied from a DMA controlling circuit 40 to the DMA devices 10, 20, and 30. In other words, accesses of the memories 13, 22, and 32 connected to the buses 11, 21, and 31 are controlled in accordance with control signals supplied from the DMA controlling circuit 40.

When the CPU 12 sends to the DMA controlling circuit 40 a command that causes image data to be read from the flash memory 32, the DMA controlling circuit 40 outputs address information or the like of image data to be read from the flash memory 32 as a control signal in accordance with the command and supplies the control signal to the DMA device 30. The DMA device 30 accesses the flash memory 32 in accordance with the control signal supplied from the DMA controlling circuit 40. The image data are read through the bus 31. The image data that are read from the flash memory 32 are transferred to the processing circuit 41 under the control of the DMA device 30.

The image data transferred to the processing circuit 41 are processed (for example, enlarged or reduced) and output by the processing circuit 41 in accordance with a command supplied from for example the CPU 12. Image data that are output from the processing circuit 41 are converted into a drive signal for the LCD 43 by an LCD controller 42 and displayed thereon.

In the foregoing structure of the image processing apparatus 1, the buses 11, 21, and 31, the DMA devices 10, 20, and 30, the DMA controlling circuit 40, and the processing circuit 41 are integrated as for example one LSI (Large Scale Integrated circuit).

Next, the memory access control that the DMA controlling circuit 40 performs will be described in detail. In this example, it is assumed that a part of image data stored in the flash memory 32 is trimmed in a rectangular shape and transferred. For example, as shown in Fig. 4, a part of an original image 50 is trimmed as a trimming image 51 in a rectangular shape from the flash memory 32. In this case, the flash memory 32 is controlled so that only image data corresponding to the trimming image 51 are accessed, whereas data of an unnecessary area are not accessed.

In this example, it is assumed that the trimming image 51 is designated by the overall start address of the trimming image 51, address A_{ST0}, and the horizontal and vertical sizes of the trimming image 51, size H and size V. In addition, it is assumed that horizontal size HALL, the start address, and the end address of the original image 50, namely addresses corresponding to data at the upper left corner and lower right corner of the original image 50 are known.

Fig. 5 is a flow chart showing a process for trimming an image 50 and obtaining a trimming image 51 according to the embodiment of the present invention. First of all, data of the address A_{ST0} as the overall start address, size H, size V, and so forth of the trimming image 51 are set to the DMA controlling circuit 40 (at step S10). These data are supplied from an external CPU (not shown). Alternatively, these data may be supplied from the CPU 12. In addition to these data, information that designates the memory 32 of the memories 13, 22, and 32 as the flash memory 32 is supplied to the DMA controlling circuit 40.

Data of address A_{STn} as the start address of the next column of the trimming image 51 and the transfer size H are sent from the DMA controlling circuit 40 to the DMA device 30 at step S11. In addition, a start signal that causes the flash memory 32 to start transferring data is sent. When the first column of the trimming image 51 is transferred, address A_{ST0}, which is the overall start address of the trimming image 51, is designated as address A_{STn}.

The DMA device 30 accesses the flash memory 32 in accordance with start address A_{ST0}, transfer size H, and the start signal. As a result, image data of the first column of the trimming image 51 are read from the flash memory 32. Address A_{ST0} of the flash memory 32 is accessed by the DMA device 30. Whenever the DMA device 30 accesses the flash memory 32, image data are successively read from address A_{ST0} for addresses corresponding to size H. The image data that are read are transferred to the processing circuit 41 through the bus 31. After the image data are transferred until the addresses corresponding to size H, data for one column of the trimming image 51 are transferred (at step S12).

After image data for one column of the trimming image 51 are transferred, an end signal is sent from the DMA device 30 to the DMA controlling circuit 40 at step S13. When the DMA controlling circuit 40 receives the end signal, the DMA controlling circuit 40 determines whether or not data for size V have been transferred (at step S14). When the determined result represents that data for size V have been transferred, since the image data of the trimming image 51 have been transferred, the process is completed.

In contrast, when the determined result represents that data for size V have not been transferred, the flow returns to step S11. Then, the DMA controlling circuit 40 calculates address A_{ST1} of the start address of the next column. Assuming that the start address of the n-th column of the trimming image 51 is address A_{STn}, address A_{ST(n+1)}, which is the start address of the next column, is obtained by adding addresses corresponding to horizontal size H_{ALL} of the original image 50 to address A_{STn}.

Whether or not the data for size V have been transferred may be determined by for example a count value for the number of cycles of the loop process returned from step S14 to step S11.

In the foregoing, an example of which image data that are trimmed from image data stored in the flash memory 32 are transferred was described. However, the present invention can be applied to the case that image data that are trimmed from image data stored in the RAM 13 connected to the bus 11 or in the eDRAM 22 connected to the bus 21 are transferred.

The DMA controlling circuit 40 performs the operation for designating read widths of image data to the DMA devices 10, 20, and 30, the operation for designating the start address of the column to be subsequently read, and the operation for sending the start signal that causes the data transfer to start. The image processing apparatus 1 according to the embodiment is connected to the three types of buses 11, 21, and 31 having different data bus widths. Dedicated DMA devices 10, 20, and 30 are disposed for the buses 11, 21, and 31, respectively.

When an interface to the DMA controlling circuit 40 is in common with the DMA devices 10, 20, and 30, they can share the DMA controlling circuit 40. For example, the DMA devices 10, 20, and 30 commonly use the specifications for the start signal and the method for designating the address.

The DMA controlling circuit 40 is composed of adders and registers. Thus, the circuit scale of the DMA controlling circuit 40 is relatively large. Consequently, when the DMA devices 10, 20, and 30 share the DMA controlling circuit 40, the overall circuit scale of the apparatus can be decreased.

On the other hand, when viewed from the DMA controlling circuit 40 side, the interface to the DMA controlling circuit 40 is in common with the DMA devices 10, 20, and 30. Thus, the DMA controlling circuit 40 can equally deal with the buses 11, 21, and 31 connected to the DMA devices 10, 20, and 30, respectively.

When the design specifications of for example a bus to be connected change, if a dedicated DMA device is provided for the changed bus and the interface of the DMA device is in common with the interface of the other DMA devices, the DMA controlling circuit 40 can control the changed bus. Thus, the design of a bus can be easily changed. As a result, the design resources can be effectively reused.

As described above, according to the present invention, a part of an original image is trimmed in a rectangular shape and transferred for each column at a time. Thus, since data of only a necessary portion can be transferred, a desired rectangular area can be trimmed without need to transfer data of an unnecessary data area. As a result, data can be transferred at high speed.

In addition, according to the present invention, the function for reading data for each column from a trimming image is separated from the function for controlling that function. Thus, when the present invention is applied to a system that is connected to a plurality of memories and buses having different data bus widths, the memories and buses can share the control function. As a result, the overall circuit scale of the apparatus can be decreased.

In addition, according to the present invention, controlling means for sending address information that designates to data reading means an address from which data are transferred and a start signal that causes a data transfer to start is disposed. A plurality of image data reading means share an interface to the controlling means. Thus, the controlling means can equally deal with a plurality of buses having different data bus widths. As a result, a bus can be flexibly changed. In addition, as an effect of the present invention, the design resources can be effectively reused.

## Claims

1. An image processing apparatus for trimming out a part of image data stored in a memory and transferring the trimming image data, the image processing apparatus comprising:
image data reading means for reading image data from a memory; and
controlling means for controlling the image data reading means that reads the image data from the memory,
wherein when a part of image data stored in the memory is trimmed, the controlling means is configured to control the image data reading means so as to read the image data for each column at a time from the memory.

2. The image processing apparatus as set forth in claim 1,
wherein the controlling means is configured to supply address information that represents an address from which image data are read for one column and read width information that represents the horizontal size of one column and cause the data reading means to start reading the image data form the memory so as to control the image data reading means.

3. The image processing apparatus as set forth in claim 1, further comprising:
a plurality of image data reading means connected to different buses,
wherein the controlling means is configured to control each of the plurality of image data reading means.

4. The image processing apparatus as set forth in claim 3,
wherein the specifications of an interface to the controlling means are in common with the plurality of image data reading means.

5. An image processing method for trimming out a part of image data stored in a memory and transferring the trimming image data, the image processing method comprising the step of:
when a part of image data stored in the memory is trimmed, reading the image data for each column at a time from the memory.

6. The image processing method as set forth in claim 5,
wherein image data for one column are designated by an address from which the image data are read and read width information that represents the horizontal size of one column.
